# EUROPEAN PATENT APPLICATION

(11) **EP 1 852 493 A1**
(43) Date of publication of application: **07.11.2007**
(21) Application number: 06113564.6
(22) Date of filing: 05.05.2006
(51) Int. Cl.: C10G 1/04

(54) **Hydrothermal treatment of carbon-based energy carrier material**

(71) Applicant: BIOeCON International Holding N.V., Curaçao (AN)
(72) Inventor: O'Connor, Paul, 3871 KM Hoevelaken (NL)
(74) Representative: Rasser, Jacobus Cornelis

(57) **Abstract**

Disclosed is a hydrothermal treatment process for conversion of a carbon-based energy carrier material. The process comprises a step for sensitizing or activating the carbon based energy carrier material to increase its susceptibility to hydrothermal conversion. As a result of the sensitization step, the hydrothermal conversion step itself may be carried out under relatively mild conditions.

The process comprises the steps of sensitizing the carbon-based energy carrier material to increase its susceptibility to hydrothermal conversion; and subjecting the sensitized carbon-based energy carrier material to hydrothermal conversion at a temperature of less than 300 degrees centigrade in a hydrothermal treatment reactor.

## Description

### BACKGROUND OF THE INVENTION

### 1. Field of the Invention

The present invention relates to a hydrothermal treatment process for conversion of a carbon-based energy carrier material. The process comprises a step for sensitizing or activating the carbon based energy carrier material to increase its susceptibility to hydrothermal conversion. As a result of the sensitization step, the hydrothermal conversion step itself may be carried out under relatively mild conditions.

### 2. Description of the Related Art

Certain carbon based energy carrier materials, such as coal, tar sand, shale oil, and biomass are abundantly available, but notoriously difficult to convert to usable liquid fuel compositions. One available method for converting carbon based energy carrier materials that contain relatively low levels of moisture involves pyrolysis. Broadly defined, pyrolysis is a thermal conversion reaction carried out in an atmosphere that is substantially free of oxygen and hydrogen. Generally, pyrolysis is carried out at a temperature of up to 400 to 600 degrees centigrade and a pressure of 1 to 5 bar.

Another available process involves hydrothermal conversion of energy carrier material, that is, thermal treatment in the presence of water and/or steam. The temperature is generally in excess of 300 degrees centigrade, with a corresponding steam pressure in excess of 85 bar. Such a high pressure requires expensive equipment, as well as the input of large amounts of thermal energy. An example of such a process, referred to as HydroThermal Upgrading (HTU), is described by Goudriaan et al., Chemical Engineering Science vol. 45, Issue 8 (1990), pages 2729-34.

It is therefore desirable to provide a hydrothermal treatment process that can be carried out under milder conditions of temperature and pressure than has heretofore been possible.

### BRIEF SUMMARY OF THE INVENTION

The present invention relates to hydrothermal treatment process for the conversion of a carbon-based energy carrier material comprising the steps of:
a) sensitizing the carbon-based energy carrier material to increase its susceptibility to hydrothermal conversion;
b) subjecting the sensitized carbon-based energy carrier material to hydrothermal conversion at a temperature of less than 300 degrees centigrade in a hydrothermal treatment reactor, to obtain a liquid mixture of organic compounds comprising carbon, hydrogen, and oxygen.

In a preferred embodiment of the process, step b) is carried out at a pressure of less than 50 bar. Preferably the conversion temperature is less than 200 degrees centigrade, corresponding to a saturated steam pressure of less than about 15 bar.

Also step a) may be performed under hydrothermal conditions, at a pressure of less than 50 bar. Preferably, the conversion temperature is less than 200 degrees centigrade, corresponding to a saturated steam pressure of less than about 15 bar.

### DESCRIPTION OF ILLUSTRATIVE EMBODIMENTS

An important aspect of the present invention is the step of sensitizing a carbon based energy carrier material prior to the hydrothermal conversion step itself. Because the sensitized material has an increased susceptibility to hydrothermal conversion, the hydrothermal conversion itself may be carried out at a lower temperature and pressure than is normally employed for this type of reaction.

The hydrothermal conversion reaction is particularly suitable for materials that have a relatively high moisture content. Certain biomass materials having by nature a high moisture content, such as bagasse, switch grass, beet pulp, and the like, can be used as a feedstock for hydrothermal conversion.

Energy carrier materials having a low moisture content require the addition of water or steam to the hydrothermal treatment reactor. Examples of such materials include coal, tar sand, shale oil, lignite, and certain biomass materials, such as straw, wood chips, saw dust, and the like.

Instead of, or in addition to, water another solvent may be added, such as ethanol.

There are various ways in which the carbon based energy carrier material may be sensitized prior to the hydrothermal conversion step itself.

One process involves providing particles of the carbon based energy carrier material, and coating these particles with smaller particles of a catalytic material. The coated particles are subjected to thermal treatment, during which the energy carrier material becomes sensitized. This process is disclosed in detail in our co-pending patent application entitled *"Pretreatment of particulate carbon-based energy carrier material*", the disclosures of which are incorporated herein by reference.

Another process for sensitizing the carbon based energy carrier material is suitable for energy carrier materials that contain a polymer of photosynthetic origin. In this process, small particles of an inorganic material are embedded within the polymeric material of photosynthetic origin. This process is disclosed in detail in our co-pending patent application entitled *"Method of making a polymeric material of photosynthetic origin comprising particulate inorganic material",* the disclosures of which are incorporated herein by reference

Yet another process for sensitizing the carbon based energy carrier material comprises the step of contacting the carbon based energy carrier material with reaction products obtained in step b) of the process of the present invention. It will be understood that when the process is started no reaction product is yet available. Therefore, at this stage, the carbon based energy carrier material may be sensitized by some other method. It is also possible to start the reaction with non-sensitized material, and carry out the hydrothermal conversion step under conventional conditions of temperature and pressure.

For example, the reaction may be started at a temperature of up to 370 degrees centigrade, and a pressure of about 200 bar, or preferably with superheated steam ("dry steam"), producing a reaction product that is practically suitable for mixing with the carbon based energy carrier material for sensitization purposes. Once enough reaction product is formed to operate the reaction with a continuous supply of sensitized material, the hydrothermal conversion conditions can then be changed to a temperature of less than 300 degrees centigrade and A pressure of less than 50 bar.

In a further preferred embodiment the sensitizing step a) comprises the step of subjecting the energy carrier material to a pH swing of at least 4 pH units. In one embodiment, the pH swing is produced by first exposing the carbon-based energy carrier material to a pH of less than 6, and increasing the pH to more than 8, with the proviso that the pH change be at least 4 pH units. For example, if the acidic pH is 6, the pH is increased to at least 10; if the acidic pH is 5, the pH is increased to at least 9; etc.

In an alternate embodiment the pH swing is produced by first exposing the carbon-based energy carrier material to a pH of more than 8, and lowering the pH to less than 6, with the proviso that the pH change be at least 4 units. For example, if the alkaline pH is 8, the pH is lowered to 4 or less; if the alkaline pH is 9, the pH is lowered to 5 or less; etc.

In a particularly preferred embodiment the pH swing comprises the steps of first exposing the carbon-based energy carrier material to a pH of less than 3, and increasing the pH to more than 6.

Conveniently the pH swing is produced by respective additions to the carbon-based energy carrier material of an aqueous solution of an acid or a base. Suitable acids include mineral acids, in particular strong mineral acids such as such as hydrochloric acid, nitric acid, and sulfuric acid. Organic acids are also suitable, in particular organic acids as may be produced in the subsequent hydrothermal conversion of the energy carrier material, because of their abundant availability at the site where the process is carried out, and their compatibility with the other steps of the process.

Suitable bases include inorganic materials, in particular inexpensive inorganic materials such as potash, soda ash, caustic, and lime.

The subsequent additions of an acid and a base (or a base and an acid) to the energy carrier material results in the presence of a salt. In general the salt does not interfere with the subsequent hydrothermal conversion reaction. The hydrothermal conversion typically results in the formation liquid product comprising a water-rich phase and a hydrocarbon-rich phase, with virtually all of the salt present in the water-rich phase. The salt may be recovered from the water-rich phase by any suitable technique.

In a preferred embodiment the salt is embedded in the carbon-based energy carrier material in the form of small crystals. This is done by changing the conditions such that salt present in solution precipitates. In general, it is undesirable to deposit salt crystals on the outer surface of the particles of energy carrier material. Therefore, excess liquid is drained off first, leaving the energy carrier material soaked with a salt solution. Next, the conditions are changed to cause precipitation of the salt within the particles of energy carrier material. This change of conditions may be anything that causes precipitation of the specific salt, and may include, for example, a change in temperature, a change in pH, evaporation of the solvent (which, in most cases, is water), and combinations of such measures.

The salt crystals embedded within the particles of energy carrier material tend to break up or open up these particles, thereby contributing to the required sensitization of the energy carrier material to a subsequent hydrothermal treatment.

Thus, the invention has been described by reference to certain embodiments discussed above. It will be recognized that these embodiments are susceptible to various modifications and alternative forms well known to those of skill in the art.

Many modifications in addition to those described above may be made to the process described herein without departing from the spirit and scope of the invention. Accordingly, although specific embodiments have been described, these are examples only and are not limiting upon the scope of the invention.

## Claims

1. Hydrothermal treatment process for the conversion of a carbon-based energy carrier material comprising the steps of:
a) sensitizing the carbon-based energy carrier material to increase its susceptibility to hydrothermal conversion;
b) subjecting the sensitized carbon-based energy carrier material to hydrothermal conversion at a temperature of less than 300 degrees centigrade in a hydrothermal treatment reactor, to obtain a liquid mixture of organic compounds comprising carbon, hydrogen, and oxygen.

2. The process of claim 1 wherein step b) is carried out at a pressure of less than 50 bar.

3. The process of claim 1 wherein step b) is carried out at a temperature of less than 200 degrees centigrade.

4. The process of any one of the preceding claims whereby step a) comprises the formation of particles of the carbon-based energy carrier material coated with particles of a catalytic material.

5. The process of any one of claims 1 to 2, wherein step a) comprises the formation of a polymer of photosynthetic origin having embedded therein small particles of an inorganic material.

6. The process of any one of claims 1 to 3, further comprising the step of recycling to step a) part of the liquid mixture obtained in step b).

7. The process of any one of claims 1 to 3 wherein step a) comprises subjecting the carbon-based energy carrier material to a pH swing of at least 4 pH units.

8. The process of claim 7 wherein the pH swing comprises the steps of first exposing the carbon-based energy carrier material to a pH of less than 6, and increasing the pH to more than 8.

9. The process of claim 7 wherein the pH swing comprises the steps of first exposing the carbon-based energy carrier material to a pH of more than 8, and lowering the pH to less than 6.

10. The process of claim 7 wherein the pH swing comprises the steps of first exposing the carbon-based energy carrier material to a pH of less than 3, and increasing the pH to more than 6.

11. The process of any one of the preceding claims wherein the pressure during step b) is less than 20 bar.

12. The process of any one of the preceding claims wherein the pressure in step b) is autogenous.

13. The process of any one of the preceding claims whereby the carbon based energy carrier is sensitized by contacting it with the liquid mixture of organic compounds produced in step b).

14. The process of claim 13 performed at a temperature of 25 to 200 degrees centigrade.

15. The process of claim 13 or 14 wherein the pressure is autogenous.

16. The process of any one of the preceding claims whereby step a) comprises the formation of particles of the carbon-based energy carrier material coated with particles of a catalytic material.

17. The process of any one of claims 7-16, wherein the pH swing results in the formation of a dissolved salt, said process further comprising the step of causing precipitation of the salt within the carbon-based energy carrier material.
